# EUROPEAN PATENT APPLICATION

(11) **EP 4 596 651 A1**
(43) Date of publication of application: **06.08.2025**
(21) Application number: 23925362.8
(22) Date of filing: 17.10.2023
(51) Int. Cl.: C09K 5/04, F25B 1/00

(54) **REFRIGERANT-CONTAINING COMPOSITION, USE OF SAME, REFRIGERATOR COMPRISING SAME, AND METHOD FOR OPERATING REFRIGERATOR**

(30) Priority: 01.03.2023 JP 2023031403
(71) Applicant: DAIKIN INDUSTRIES, LTD., Osaka-shi, Osaka 530-0001 (JP)
(72) Inventor: ITANO, Mitsushi, Osaka-Shi, Osaka 530-0001 (JP); GOTOU, Tomoyuki, Osaka-Shi, Osaka 530-0001 (JP); YOSHIMURA, Takashi, Osaka-Shi, Osaka 530-0001 (JP); USUI, Takashi, Osaka-Shi, Osaka 530-0001 (JP); NAKAUE, Tsubasa, Osaka-Shi, Osaka 530-0001 (JP); TOKUNO, Satoshi, Osaka-Shi, Osaka 530-0001 (JP)
(74) Representative: Hoffmann Eitle
(86) International application number: PCT/JP2023/037603
(87) International publication number: WO 2024/180808

(57) **Abstract**

An object of this invention is to provide a novel low-GWP mixed refrigerant. For solving this problem, the invention provides a composition comprising a refrigerant, wherein the refrigerant comprises trans-1,2-difluoroethylene (HFO-1132(E)) and 1,1-difluoroethane (R152a) respectively in amounts of 22.6 to 57 mass% and 77.4 to 43 mass% based on a total amount thereof.

## Description

### Technical Field

The present disclosure relates to a composition comprising a refrigerant, use of the composition, a refrigerating machine having the composition, and a method for operating the refrigerating machine.

### Background Art

A working medium for thermal cycling that contains trifluoroethylene (HFO-1123) and 1,2-difluoroethylene (HFO-1132) has been proposed as a working medium for thermal cycling that can replace R410A (Patent Literature (PTL) 1).

### Citation List

### Patent Literature

PTL 1: WO2015/141678

### Summary of Invention

### Technical Problem

An object of the present disclosure is to provide a novel low-GWP mixed refrigerant.

### Solution to Problem

### Item 1.

A composition comprising a refrigerant, wherein the refrigerant comprises trans-1,2-difluoroethylene (HFO-1132(E)) and 1,1-difluoroethane (R152a) respectively in amounts of 22.6 to 57 mass% and 77.4 to 43 mass% based on a total amount thereof.

### Item 2.

The composition according to Item 1, comprising HFO-1132(E) and R152a respectively in amounts of 22.9 to 57 mass% and 77.1 to 43 mass% based on the total amount thereof.

### Item 3.

The composition according to Item 1, comprising HFO-1132(E) and R152a respectively in amounts of 28.3 to 57 mass% and 71.7 to 43 mass% based on the total amount thereof.

### Item 4.

The composition according to any one of Items 1 to 3, comprising HFO-132(E) and R152a in the total amount of 99.5 mass% or more based on the entire refrigerant.

### Item 5.

A composition comprising a refrigerant,
wherein the refrigerant comprises R152a, R32, and HFO-1132(E) in a total amount of 99.5 mass% or more based on the entire refrigerant, and
when mass% of HFO-1132(E), R32, and R152a based on their sum are respectively represented by x, y, and z, coordinates (x,y,z) in a ternary composition diagram in which the sum of HFO-1132(E), R32, and R152a is 100 mass% are within the range of a figure surrounded by straight lines CD', D'E', E'F, FB, BA, and AC that connect the following 6 points:
   point C (60.0, 40.0, 0.0)
   point D' (57.4, 5.0, 37.6),
   point E' (17.5, 5.0, 77.5),
   point F (0.0, 22.9, 77.1),
   point B (0.0, 32.0, 68.0), and
   point A (55.7, 44.3, 0.0), and
   on the line segments CD', D'E'**,** E'F, and BA (excluding the points A, C, B, and F).

### Item 6.

The composition according to Item 5,
wherein in the refrigerant, the coordinates (x,y,z) are within the range of a figure surrounded by straight lines C'D', D'J', J'K, and KC' that connect the following 4 points:
point C' (58.3, 17.7, 24,0),
point D' (57.4, 5.0, 37.6),
point J' (22.9, 5.0, 72.1), and
point K (19.3, 9.0, 71.7), and
on the straight lines C'D', D'J', J'K, and KC'.

### Item 7.

The composition according to Item 5,
wherein in the refrigerant, the coordinates (x,y,z) are within the range of a figure surrounded by straight lines C'D', D'L', L'M, and MC' that connect the following 4 points:
point C' (58.3, 17.7, 24,0),
point D' (57.4, 5.0, 37.6),
point L' (17.1, 5.0, 77.9), and
point M (14.0, 7.8, 78.2), and
on the straight lines C'D', D'L', L'M, and MC'.

### Item 8.

The composition according to Item 2 or 5, for use as an alternative refrigerant for R410A.

### Item 9.

The composition according to Item 3 or 6, for use as an alternative refrigerant for R1234yf.

### Item 10.

The composition according to Item 9, for use as an alternative refrigerant for R1234yf, and use as a composition for operating a refrigeration cycle of air-conditioning equipment for electric vehicles.

### Item 11.

The composition according to Item 1 or 7, for use as an alternative refrigerant for R404A.

### Item 12.

A refrigeration apparatus comprising:
a use side heat transfer cycle for circulating a use side refrigerant;
a heat source side heat transfer cycle for circulating a heat source side refrigerant; and
a cascade heat exchanger for performing heat exchange between the use side refrigerant and the heat source side refrigerant,
wherein the heat source side refrigerant is the composition according to any one of Items 1 to 7.

### Item 13.

A refrigeration method comprising a step of operating a refrigeration cycle using the composition according to any one of Items 1 to 7.

### Item 14.

A refrigerator comprising the composition according to any one of Items 1 to 7 as a working fluid.

### Advantageous Effects of Invention

The refrigerant of the present disclosure has a low GWP.

### Brief Description of Drawings

Fig. 1 is a ternary diagram illustrating a formulation of a refrigerant of the present disclosure.
Fig. 2 is a ternary diagram illustrating a formulation of a refrigerant of the present disclosure.
Fig. 3 is a ternary diagram illustrating a formulation of a refrigerant of the present disclosure.
Fig. 4 is a ternary diagram illustrating a formulation of a refrigerant of the present disclosure.

### Description of Embodiments

In order to achieve the above object, the present inventors conducted extensive research and found that various mixed refrigerants described below have the characteristics described above.

The present disclosure has been completed as a result of further research based on this finding. The present disclosure includes the following embodiments.

### <Definition of Terms>

In the present specification, the term "refrigerant" includes at least compounds that are specified in ISO 817 (International Organization for Standardization) and that are given a refrigerant number (ASHRAE number) representing the type of refrigerant with "R" at the beginning, and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC) .

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration-oil-containing working fluid" so as to distinguish it from the "refrigerant composition."

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, the term "air-conditioning equipment for vehicles" refers to a type of refrigeration apparatus used in vehicles such as gasoline vehicles, hybrid vehicles, electric vehicles, and hydrogen vehicles. The air-conditioning equipment for vehicles refers to a refrigeration apparatus including refrigeration cycles in which heat exchange is performed in a liquid refrigerant by an evaporator, the thus evaporated refrigerant gas is sucked by a compressor, the thus adiabatically compressed refrigerant gas is cooled to be liquefied by a condenser, the resultant is caused to pass through an expansion valve for adiabatic expansion, and then the resultant is supplied again to the evaporator as a liquid refrigerant.

The unit of pressure described in the present specification is absolute pressure, unless otherwise specified.

### 1. Refrigerant

A refrigerant of the present disclosure comprises trans-1,2-difluoroethylene (HFO-1132(E)) and 1,1-difluoroethane (R152a). The refrigerant of the present disclosure may further comprise difluoromethane (R32).

The refrigerant of the present disclosure is a low-GWP mixed refrigerant.

The refrigerant of the present disclosure may comprise HFO-1132(E) and R152a respectively in amounts of 22.6 to 57 mass% and 77.4 to 43 mass% based on the total amount thereof. This refrigerant has a refrigerating capacity ratio relative to R404A of 70% or more, and a disproportionation reaction does not occur at 5 MPa and 150°C. Therefore, this refrigerant can be used as an alternative refrigerant for R404A.

The refrigerant of the present disclosure may comprise HFO-1132(E) and R152a respectively in amounts of 44.7 to 57 mass% and 55.3 to 43 mass% based on the total amount thereof. This refrigerant has a refrigerating capacity ratio relative to R404A of 90% or more, and a disproportionation reaction does not occur at 5 MPa and 150°C. Therefore, this refrigerant can be used as an alternative refrigerant for R404A.

The refrigerant of the present disclosure may comprise HFO-1132 (E) and R152a respectively in amounts of 22.9 to 57 mass% and 77.1 to 43 mass% based on the total amount thereof. This refrigerant has a refrigerating capacity ratio relative to R410A of 55% or more, and a disproportionation reaction does not occur at 5 MPa and 150°C. Therefore, this refrigerant can be used as an alternative refrigerant for A410A.

The refrigerant of the present disclosure may comprise HFO-1132 (E) and R152a respectively in amounts of 41.4 to 57 mass% and 59.6 to 43 mass% based on the total amount thereof. This refrigerant has a refrigerating capacity ratio relative to R410A of 65% or more, and a disproportionation reaction does not occur at 5 MPa and 150°C. Therefore, this refrigerant can be used as an alternative refrigerant for A410A.

The refrigerant of the present disclosure may comprise HFO-1132 (E) and R152a respectively in amounts of 28.3 to 57 mass% and 71.7 to 43 mass% based on the total amount thereof. This refrigerant has a boiling point of -40°C or less, and a disproportionation reaction does not occur at 5 MPa and 150°C. This refrigerant can be used as an alternative refrigerant for R1234yf.

The refrigerant of the present disclosure may comprise HFO-1132 (E) and R152a respectively in amounts of 44.1 to 57 mass% and 55.9 to 43 mass% based on the total amount thereof. This refrigerant has a refrigerating capacity ratio relative to R1234yf of 165% or more, and a disproportionation reaction does not occur at 5 MPa and 150°C. This refrigerant can be used as an alternative refrigerant for R1234yf.

The refrigerant of the present disclosure may be free from at least one refrigerant selected from the group consisting of refrigerants comprising HFO-1132(E) and R152a respectively in amounts, based on the total amount thereof, of:
22.6 mass% and 77.4 mass%;
25.0 mass% and 75.0 mass%;
28.3 mass% and 71.7 mass%;
30.0 mass% and 70.0 mass%;
35.0 mass% and 65.0 mass%;
36.0 mass% and 64.0 mass%;
38.0 mass% and 62.0 mass%;
45.0 mass% and 55.0 mass%; and
55.0 mass% and 45.0 mass%.

In the above-described embodiment, the refrigerant of the present disclosure may further comprise an additional refrigerant in addition to HFO-1132(E) and R152a as long as the properties and effects described above are not impaired. In this respect, in one embodiment, the refrigerant of the present disclosure comprises HFO-1132 (E) and R152a in a total amount of preferably 99.5 mass% or more, more preferably 99.75 mass% or more, further preferably 99.9 mass% or more, still further preferably 99.999 mass% or more, and most preferably 99.9999 mass% or more based on the entire refrigerant. The refrigerant of the present disclosure may substantially consist only of HFO-1132(E) and R152a, and in this case, the refrigerant of the present disclosure may consist only of HFO-1132(E), R152a, and an unavoidable impurity. The refrigerant of the present disclosure may consist only of HFO-1132(E) and R152a.

Additional refrigerants are not limited and can be widely selected. The mixed refrigerant may comprise one additional refrigerant, or two or more additional refrigerants. Examples of the additional refrigerant include R32, acetylene, methylamine, HFO-1132a, HFO-1141, HFO-1123, HFC-143a, HFC-134a, Z-HFO-1132, HFO-1243zf, HFC-245cb, HCFC-1122, HCFC-124, CFC-1113, and 3,3,3-trifluoropropyne.

The refrigerant of the present disclosure may further comprise R32 in a content different from that of the additional refrigerant, specifically in an amount of 5 mass% or more based on the entire refrigerant. Now, an embodiment in which the refrigerant comprises R32 in an amount of 5 mass% or more based on the entire refrigerant will be described.

In the refrigerant of the present disclosure, when the mass% of HFO-1132(E), R32, and R152a based on their sum are respectively represented by x, y, and z, if coordinates (x,y,z) in a ternary composition diagram in which the sum of HFO-1132(E), R32, and R152a is 100 mass% satisfy the following requirements, a disproportionation reaction does not occur at 5 Mpa and 150°C, GWP is 300 or less, and a refrigerating capacity ratio relative to R410A is 55% or more:

### <Requirements>

The coordinates (x,y,z) are within the range of a figure surrounded by straight lines CD', D'E', E'F, FB, BA, and AC that connect the following 6 points:
point D' (57.4, 5.0, 37.6),
point E' (17.5, 5.0, 77.5),
point F (0.0, 22.9, 77.1),
point B (0.0, 32.0, 68.0), and
point A (55.7, 44.3, 0.0), and
on the line segments CD', D'E', E'F, and BA (excluding the points A, C, B, and F).

In the refrigerant of the present disclosure, when the mass% of HFO-1132(E), R32, and R152a based on their sum are respectively represented by x, y, and z, if coordinates (x,y,z) in a ternary composition diagram in which the sum of HFO-1132(E), R32, and R152a is 100 mass% satisfy the following requirements, a disproportionation reaction does not occur at 5 Mpa and 150°C, GWP is 150 or less, and a boiling point is -40°C or less:

### <Requirements>

The coordinates (x,y,z) are within the range of a figure surrounded by straight lines C'D', D'J', J'K, and KC' that connect the following 4 points:
point C' (58.3, 17.7, 24,0),
point D' (57.4, 5.0, 37.6),
point J' (22.9, 5.0, 72.1), and
point K (19.3, 9.0, 71.7), and
on the straight lines C'D', D'J', J'K, and KC'.

In the refrigerant of the present disclosure, when the mass% of HFO-1132(E), R32, and R152a based on their sum are respectively represented by x, y, and z, if coordinates (x,y,z) in a ternary composition diagram in which the sum of HFO-1132(E), R32, and R152a is 100 mass% satisfy the following requirements, a disproportionation reaction does not occur at 5 Mpa and 150°C, GWP is 150 or less, and a refrigerating capacity ratio relative to R404A is 70% or more:

### <Requirements>

The coordinates (x,y,z) are within the range of a figure surrounded by straight lines C'D', D'L', L'M, and MC' that connect the following 4 points:
point C' (58.3, 17.7, 24,0),
point D' (57.4, 5.0, 37.6),
point L' (17.1, 5.0, 77.9), and
point M (14.0, 7.8, 78.2), and
on the straight lines C'D', D'L', L'M, and MC'.

The refrigerant of the present disclosure may be free from at least one refrigerant selected from the group consisting of refrigerants comprising HFO-1132(E), R32, and R152a respectively in amounts, based on the total amount thereof, of:
5.0 mass%, 25.0 mass%, and 70.0 mass%;
12.2 mass%, 34.7 mass%, and 53.1 mass%;
14.0 mass%, 7.8 mass%, and 78.2 mass%;
15.0 mass%, 15.0 mass%, and 70.0 mass%;
15.0 mass%, 25.0 mass%, and 60.0 mass%;
15.0 mass%, 35.0 mass%, and 50.0 mass%;
19.3 mass%, 9.0 mass%, and 71.7 mass%;
25.0 mass%, 5.0 mass%, and 70.0 mass%;
25.0 mass%, 10.0 mass%, and 65.0 mass%;
25.0 mass%, 15.0 mass%, and 60.0 mass%;
25.0 mass%, 20.0 mass%, and 55.0 mass%;
25.0 mass%, 30.0 mass%, and 45.0 mass%;
26.5 mass%, 20.7 mass%, and 52.8 mass%;
30.0 mass%, 10.0 mass%, and 60.0 mass%;
30.0 mass%, 11.0 mass%, and 59.0 mass%;
30.0 mass%, 15.0 mass%, and 55.0 mass%;
35.0 mass%, 5.0 mass%, and 60.0 mass%;
35.0 mass%, 10.0 mass%, and 55.0 mass%;
35.0 mass%, 15.0 mass%, and 50.0 mass%;
35.0 mass%, 20.0 mass%, and 45.0 mass%;
35.0 mass%, 30.0 mass%, and 35.0 mass%;
35.0 mass%, 40.0 mass%, and 25.0 mass%;
40.0 mass%, 10.0 mass%, and 50.0 mass%;
40.8 mass%, 8.1 mass%, and 51.1 mass%;
43.0 mass%, 14.3 mass%, and 42.7 mass%;
45.0 mass%, 10.0 mass%, and 45.0 mass%;
45.0 mass%, 30.0 mass%, and 25.0 mass%;
45.0 mass%, 40.0 mass%, and 15.0 mass%;
55.0 mass%, 10.0 mass%, and 35.0 mass%;
55.0 mass%, 20.0 mass%, and 25.0 mass%;
55.0 mass%, 30.0 mass%, and 15.0 mass%; and
55.0 mass%, 40.0 mass%, and 5.0 mass%.

In the refrigerant of the present disclosure, when the coordinates (x,y,z) are on the straight line CD or on the lower side of the straight line CD in a ternary composition diagram in which the sum of HFO-1132(E), R32, and R152a is 100 mass%, and a point corresponding to 100 mass% of HFO-1132(E) is an upper vertex, a disproportionation reaction does not occur at 5 MPa and 150°C. In this case, even when the pressure of the refrigerant is 5 MPa and the temperature of the refrigerant is 150°C locally in the refrigeration cycle, a disproportionation reaction can be suppressed.

Besides, when the refrigerant of the present disclosure has a boiling point of -40.0° or less, there is an advantage that it is easily used in heating performed by a heat pump. For example, when the refrigerant of the present disclosure is used for operating a refrigeration cycle of air-conditioning equipment for vehicles, there is an advantage that heating can be performed by a heat pump that consumes less power than an electric heater. Examples of the air-conditioning equipment for vehicles include those for gasoline vehicles, hybrid vehicles, electric vehicles, hydrogen vehicles, and the like.

The refrigerant of the present disclosure may comprise HFO-1132(E) in an amount of 20 mass% or more, 30 mass% or more, 40 mass% or more, or 50 mass% or more based on the entire refrigerant. The refrigerant of the present disclosure may comprise R32 in an amount of 5 mass% or more, 10 mass% or more, 20 mass% or more, 30 mass% or more, or 40 mass% or more based on the entire refrigerant. The refrigerant of the present disclosure may comprise R152a in an amount of 10 mass% or more, 20 mass% or more, 30 mass% or more, 40 mass% or more, 50 mass% or more, 60 mass% or more, or 70 mass% or more based on the entire refrigerant.

The refrigerant of the present disclosure may further comprise an additional refrigerant in addition to HFO-1132(E), R32, and R152a as long as the properties and effects described above are not impaired. In this respect, in one embodiment, the refrigerant of the present disclosure comprises HFO-1132(E), R32, and R152a in a total amount of preferably 99.5 mass% or more, more preferably 99.75 mass% or more, further preferably 99.9 mass% or more, still further preferably 99.999 mass% or more, and most preferably 99.9999 mass% or more based on the entire refrigerant. The refrigerant of the present disclosure may substantially consist only of HFO-1132(E), R32, and R152a, and in this case, the refrigerant of the present disclosure may consist only of HFO-1132(E), R32, R152a, and an unavoidable impurity. The refrigerant of the present disclosure may consist only of HFO-1132(E), R32, and R152a.

Additional refrigerants are not limited and can be widely selected. The mixed refrigerant may comprise one additional refrigerant, or two or more additional refrigerants. Examples of the additional refrigerant include acetylene, methylamine, HFO-1132a, HFO-1141, HFO-1123, HFC-143a, HFC-134a, Z-HFO-1132, HFO-1243zf, HFC-245cb, HCFC-1122, HCFC-124, CFC-1113, and 3,3,3-trifluoropropyne.

### 2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 1 mass% or less, and more preferably 0.1 mass% or less.

### 2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

### 2.2. Tracer

A tracer is added to the refrigerant composition according to the present disclosure at a detectable concentration so that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.
FC-14 (tetrafluoromethane, CF₄)
HCC-40 (chloromethane, CH₃Cl)
HFC-23 (trifluoromethane, CHF₃)
HFC-41 (fluoromethane, CH₃F)
HFC-125 (pentafluoroethane, CF₃CHF₂)
HFC-134a (1,1,1,2-tetrafluoroethane, CF₃CH₂F)
HFC-134 (1,1,2,2-tetrafluoroethane, CHF₂CHF₂)
HFC-143a (1, 1, 1-trifluoroethane, CF₃CH₃)
HFC-143 (1,1,2-trifluoroethane, CHF₂CH₂F)
HFC-152 (1,2-difluoroethane, CH₂FCH₂F)
HFC-161 (fluoroethane, CH₃CH₂F)
HFC-245fa (1, 1, 1, 3, 3-pentafluoropropane, CF₃CH₂CHF₂)
HFC-236fa (1, 1, 1, 3, 3, 3-hexafluoropropane, CF₃CH₂CF₃)
HFC-236ea (1,1,1,2,3,3-hexafluoropropane, CF₃CHFCHF₂)
HFC-227ea (1,1,1,2,3,3,3-heptafluoropropane, CF₃CHFCF₃)
HCFC-22 (chlorodifluoromethane, CHClF₂)
HCFC-31 (chlorofluoromethane, CH₂ClF)
CFC-1113 (chlorotrifluoroethylene, CF₂=CClF)
HFE-125 (trifluoromethyl-difluoromethyl ether, CF₃OCHF₂)
HFE-134a (trifluoromethyl-fluoromethyl ether, CF₃OCH₂F)
HFE-143a (trifluoromethyl-methyl ether, CF₃OCH₃)
HFE-227ea (trifluoromethyl-tetrafluoroethyl ether, CF₃OCHFCF₃)
HFE-236fa (trifluoromethyl-trifluoroethyl ether, CF₃OCH₂CF₃)

The refrigerant composition of the present disclosure may comprise about 10 parts per million by weight (ppm) or more of tracers in total, based on the entire refrigerant composition. The refrigerant composition of the present disclosure may also comprise about 1000 ppm or less of tracers in total, based on the entire refrigerant composition. The refrigerant composition of the present disclosure may preferably comprise about 30 ppm or more and more preferably about 50 ppm or more of tracers in total, based on the entire refrigerant composition. The refrigerant composition of the present disclosure may preferably comprise about 500 ppm or less and about 300 ppm or less of tracer in total, based on the entire refrigerant composition.

### 2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is preferably 0.01 mass% or more, and more preferably 0.05 mass% or more, based on the entire refrigerant. The content of the stabilizer is preferably 5 mass% or less, and more preferably 2 mass% or less, based on the entire refrigerant.

### 2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is preferably 0.01 mass% or more, and more preferably 0.05 mass% or more, based on the entire refrigerant. The content of the polymerization inhibitor is preferably 5 mass% or less, and more preferably 2 mass% or less, based on the entire refrigerant.

### 3. Refrigeration-Oil-Containing Working Fluid

The refrigeration-oil-containing working fluid according to the present disclosure comprises at least the refrigerant or refrigerant composition according to the present disclosure and a refrigeration oil, for use as a working fluid in a refrigerating machine. Specifically, the refrigeration-oil-containing working fluid according to the present disclosure is obtained by mixing a refrigeration oil used in a compressor of a refrigerating machine with the refrigerant or the refrigerant composition. The refrigeration-oil-containing working fluid generally comprises 10 mass% or more of refrigeration oil. The refrigeration-oil-containing working fluid generally comprises 50 mass% or less of refrigeration oil.

### 3.1. Refrigeration Oil

The composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 cSt or more at 40°C is preferable from the standpoint of lubrication. A refrigeration oil with a kinematic viscosity of 400 cSt or less at 40°C is preferable from the standpoint of lubrication.

The refrigeration-oil-containing working fluid according to the present disclosure may further optionally contain at least one additive. Examples of additives include compatibilizing agents described below.

### 3.2. Compatibilizing Agent

The refrigeration-oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

### 5. Method for Suppressing Disproportionation Reaction

A method for suppressing a disproportionation reaction of the present disclosure is a method for suppressing a disproportionation reaction of HFO-1132(E) including a step of operating a refrigeration cycle using the refrigerant of the present disclosure.

In the method for suppressing a disproportionation reaction of the present disclosure, it is possible to obtain an effect that a disproportionation reaction of HFO-1132(E) does not occur even when the pressure of the refrigerant is 5.0 MPa and the temperature of the refrigerant is 150°C.

When the method for suppressing a disproportionation reaction of the present disclosure is employed, the refrigeration cycle can be operated with a disproportionation reaction suppressed even in a refrigerator not particularly provided with means for suppressing a disproportionation reaction.

### 6. Use for Suppressing Disproportionation Reaction

Use of the present disclosure is use of R32 and/or R152a for suppressing a disproportionation reaction of HFO-1132(E), and the suppression of a disproportionation reaction is conducted by mixing HFO-1132(E) with R32 and/or R152a in a mixing ratio in the refrigerant of the present disclosure.

In the use for suppressing a disproportionation reaction of the present disclosure, it is possible to obtain an effect that a disproportionation reaction of HFO-1132(E) does not occur, in particular, even when the pressure of the refrigerant is 5.0 MPa and the temperature of the refrigerant is 150°C.

### 7. Refrigeration Apparatus

A refrigeration apparatus of the present disclosure is a refrigeration apparatus comprising:
a use side heat transfer cycle for circulating a use side refrigerant;
a heat source side heat transfer cycle for circulating a heat source side refrigerant; and
a cascade heat exchanger for performing heat exchange between the use side refrigerant and the heat source side refrigerant,
wherein the heat source side refrigerant is the composition described above in 1.

The embodiments are described above; however, it will be understood that various changes in form and detail can be made without departing from the spirit and scope of the claims.

### Examples

The present disclosure is described in more detail below with reference to Examples. However, the present disclosure is not limited to the Examples.

Mixed refrigerants were prepared by mixing HFO-1132(E), R32, and R152a at the mass% shown in each Table based on their sum.

Each of these mixed refrigerants was examined in terms of the presence or absence of a disproportionation reaction by using the following test method under the following test conditions.

### Test Method

A refrigerant composition to be tested was transferred to and filled in a test container and heated to 150°C. Subsequently, a Pt wire in the container was melted and cut by applying a voltage, giving the refrigerant composition 30 J of energy. The presence or absence of disproportionation reaction was determined based on a rapid increase in the pressure and temperature increase in the apparatus.

### Test Conditions

Test container: 38 cc SUS container
Test temperature: 150°C
Pressure: 5 MPa

### Determination criteria

"Non-explosion": The temperature or pressure after the melting and cutting the Pt wire increased to less than twice, and no rapid disproportionation reaction occurred.

"Explosion": The temperature or pressure after the melting and cutting the Pt wire increased to twice or more, and a rapid disproportionation reaction occurred.

**[Table 1]**

| Item | Unit | Ex perimental series 1 | | | Experimental series 2 | | | | | Experimental series 3 | | |
|---|---|---|---|---|---|---|---|---|---|---|---|---|
| | | Experiment example 1-1 | Experiment example 1-2 | Experiment example 1-3 | Experiment example 2-1 | Experiment example 2-2 | Experiment example 2-3 | Example 2-4 | Example 2-5 | Experiment example 3-1 | Experiment example 3-2 | Experiment example 3-3 |
| HFO-1132 (E) | mass% | 62.0 | 60.0 | 58.0 | 60.5 | 60.5 | 58.5 | 56.5 | 56.5 | 59.0 | 57.0 | 55.0 |
| R32 | mass% | 38.0 | 40.0 | 42.0 | 20.0 | 18.0 | 20.0 | 20.0 | 22.0 | 0.0 | 0.0 | 0.0 |
| R152a | mass% | 0.0 | 0.0 | 0.0 | 19.5 | 21.5 | 21.5 | 23.5 | 21.5 | 41.0 | 43.0 | 45.0 |
| Disproportionation reaction (5Mpa) | - | Explosion | Non-explosion | Non-explosion | Explosion | Explosion | Non-explosion | Non-explosion | Non-explosion | Explosion | Non-explosion | Non-explosion |

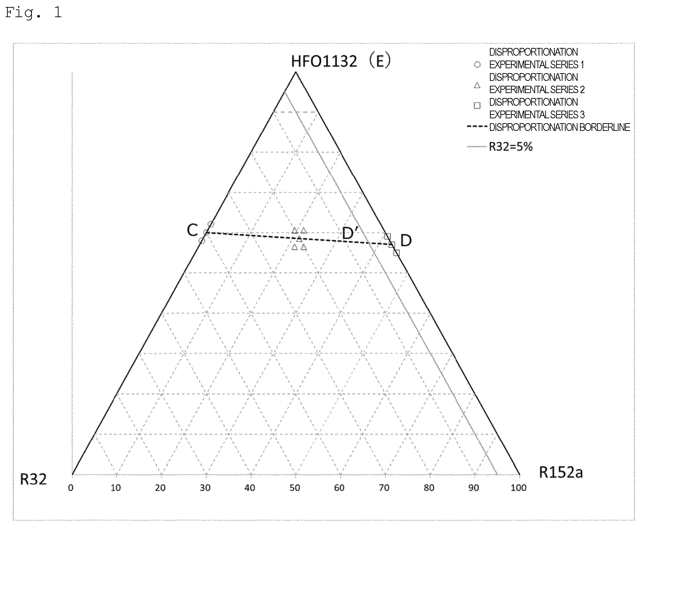

It is understood, from results shown in Table 1, that in the refrigerant of the present disclosure, disproportionation does not occur in a region illustrated in a ternary diagram of Fig. 1.

Besides, each of the mixed refrigerants was evaluated for GWP, and a COP ratio and a refrigerating capacity ratio relative to a refrigerant shown in the table. The GWP of the mixed refrigerants was evaluated with the GWP of HFO-1132(E) set to 1, and with the GWP of R32, R152a based on the values stated in IPCC (Intergovernmental Panel on Climate Change), fourth report. The COP, refrigerating capacity, and boiling point of the mixed refrigerants were determined by performing theoretical refrigeration cycle calculations for mixed refrigerants by using the National Institute of Science and Technology (NIST) Reference Fluid Thermodynamic and Transport Properties Database (Refprop 10.0) under the following conditions. It is noted that the physical property data of HFO-1132 (E) to be used in the theoretical refrigeration cycle calculation was determined by actual measurement, and added to Refprop 10.0.

### <Ratio relative to R410A>

Evaporating temperature: 5°C
Condensation temperature: 45°C
Superheating temperature: 5K
Subcooling temperature: 5K
Compressor efficiency: 70%

### <Ratio relative to R1234yf>

Evaporating temperature: -30°C
Condensation temperature: 30°C
Superheating temperature: 5 K
Subcooling temperature: 5 K
Compressor efficiency: 70%

### <Ratio relative to R404A>

Evaporating temperature: -40°C
Condensation temperature: 40°C
Superheating temperature: 20 K
Subcooling temperature: 0 K
Compressor efficiency: 70%

In the following tables, "COP ratio" and "Refrigerating capacity ratio" each indicate a ratio (%) relative to R410A, R1234yf, or R404A. In these tables, "Boiling point (°C)" is a temperature at which the liquid phase of a mixed refrigerant has atmospheric pressure (101.33 kPa).

The coefficient of performance (COP) was obtained in accordance with the following formula: COP = (refrigerating capacity or heating capacity)/power consumption

In the following tables, "Power consumption (%) for driving force" indicates electrical energy used for driving an electric vehicle, and is expressed as a ratio with respect to a power consumption when the refrigerant is HFO-1234yf. In the tables, "Power consumption (%) for heating" indicates electrical energy used for operating heating in an electric vehicle, and is expressed as a ratio with respect to power consumption when the refrigerant is HFO-1234yf.

In the following tables, "Possible travel distance (with)" is a possible travel distance obtained when an electric vehicle equipped with a secondary battery having a prescribed electric capacity is driven with heating operated, and is expressed as a relative ratio (%) calculated assuming that a possible travel distance (without) obtained without operating heating (with power consumption for heating of 0) is 100%.

As a heating method, an electric heater system was used for heating in the case of a refrigerant having a boiling point of more than -40°C, and a heat pump system was used for heating in the case of a refrigerant having a boiling point of -40°C or less.

Power consumption in operating heating was obtained in accordance with the following formula. It is noted that "heating COP" means "heating efficiency". Power consumption in operating heating = heating capacity/heating COP

Regarding the heating efficiency, when an electric heater is used, heating COP = 1, and an electric power equivalent to that for driving force is consumed for heating. In other words, the power consumption for heating is E = E/(1 + COP).

The possible travel distance was obtained in accordance with the following formula: Possible travel distance = (battery capacity)/(power consumption for driving force + power consumption for heating)

Evaluation results are shown in the following tables:

**[Table 2]**

| Item | Unit | Comparative example 1-1 | Comparative example 1-2 | Comparative example 1-3 | Example 1-1 | Example 1-2 | Example 1-3 | Example 1-4 | Example 1-5 | Comparative example 1-4 |
|---|---|---|---|---|---|---|---|---|---|---|
| E-HFO-1132 | mass% | R410A | 0.0 | 14.0 | 22.9 | 37.5 | 41.4 | 50.0 | 57.0 | 60.0 |
| R152a | mass% | | 100.0 | 86.0 | 77.1 | 62.5 | 58.6 | 50.0 | 43.0 | 40.0 |
| GWP | - | 2088 | 124 | 107 | 96 | 78 | 73 | 63 | 54 | 50 |
| COP ratio | % (relative to R410A) | 100 | 111 | 110 | 109 | 109 | 107 | 106 | 105 | 105 |
| Refrigerating capacity ratio | % (relative to R410A) | 100 | 42 | 50 | 55 | 55 | 65 | 70 | 74 | 75 |
| Disproportionation reaction (5Mpa) | - | - | - | - | - | - | - | Non-explosion | Non-explosion | Explosion |

It is understood, from the results shown in Table 2, that when a mixed refrigerant consisting of only HFO-1132(E) and R152a comprises HFO-1132(E) and R152a respectively in amounts of 57 mass% or less and 43 mass% or more based on the entire mixed refrigerant, the refrigerating capacity ratio relative to R410A is 55% or more, and a disproportionation reaction does not occur at 5 MPa and 150°C.

**[Table 3]**

| Item | | Unit | Reference example 1 | Comparative example 2-1 | Comparative example 2-2 | Comparative example 2-3 | Comparative example 2-4 | Example 2-1 | Example 2-2 | Example 2-3 | Example 2-4 | Example 2-5 | Comparative example 2-5 |
|---|---|---|---|---|---|---|---|---|---|---|---|---|---|
| Composition ratio | E-HFO-1132 | mass% | R134a | R1234yf | 0.0 | 15.0 | 25.0 | 28.3 | 37.5 | 44.1 | 50.0 | 57.0 | 60.0 |
| | R152a | mass% | | | 100.0 | 85.0 | 75.0 | 71.7 | 62.5 | 55.9 | 50.0 | 43.0 | 40.0 |
| GWP(AR4) | | - | 1430 | 4 | 97 | 97 | 97 | 89 | 78 | 70 | 63 | 54 | 50 |
| COP ratio (relative to R1234yf) | | % | 105 | 100 | 108 | 107 | 104 | 106 | 105 | 104 | 104 | 103 | 103 |
| Refrigerating capacity ratio (relative to R1234yf) | | % | 99 | 100 | 97 | 119 | 127 | 140 | 155 | 165 | 175 | 188 | 193 |
| Power consumption for driving force | | % | 100 | 100 | 100 | 100 | 100 | 100 | 100 | 100 | 100 | 100 | 100 |
| Power consumption for heating | | % | 95 | 95 | 95 | 95 | 95 | 33 | 33 | 33 | 33 | 33 | 33 |
| Possible travel distance (without heating) | | % | 100 | 100 | 100 | 100 | 100 | 100 | 100 | 100 | 100 | 100 | 100 |
| Possible travel distance (with heating) | | % | 50 | 50 | 50 | 50 | 50 | 84 | 84 | 84 | 84 | 84 | 84 |
| Boiling point | | °C | -26.1 | -29.5 | -24.0 | -34.9 | -36.8 | -40.0 | -42.5 | -44.1 | -45.1 | -46.4 | -46.9 |
| Heating method | | System | Electric heater | Electric heater | Electric heater | Electric heater | Electric heater | Heat pump | Heat pump | Heat pump | Heat pump | Heat pump | Heat pump |
| Disproportionation reaction (5Mpa) | | - | - | - | - | - | - | - | - | - | Non-explosion | Non-explosion | Explosion |

It is understood, from the results shown in Table 3, that when a mixed refrigerant consisting of only HFO-1132(E) and R152a comprises HFO-1132(E) and R152a respectively in amounts of 57 mass% or less and 32 mass% or more based on the entire mixed refrigerant, the boiling point is -40°C or less, and a disproportionation reaction does not occur at 5 MPa and 150°C.

**[Table 4]**

| Item | Unit | Comparative example 3-1 | Comparative example 3-2 | Comparative example 3-3 | Example 3-1 | Example 3-2 | Example 3-3 | Example 3-4 | Example 3-5 | Comparative example 3-4 |
|---|---|---|---|---|---|---|---|---|---|---|
| E-HFO-1132 | mass% | R404A | 0.0 | 15.0 | 22.6 | 37.5 | 44.7 | 50.0 | 57.0 | 60.0 |
| R152a | mass% | | 100.0 | 80.0 | 77.4 | 42.7 | 55.3 | 50.0 | 43.0 | 40.0 |
| GWP | - | 3922 | 124 | 133 | 96 | 78 | 69 | 63 | 54 | 50 |
| COP ratio | % (relative to R404A) | 100 | 121 | 118 | 117 | 115 | 114 | 113 | 112 | 112 |
| Refrigerating capacity ratio | % (relative to R404A) | 100 | 53 | 68 | 70 | 83 | 90 | 95 | 102 | 106 |
| Disproportionation reaction (5Mpa) | - | - | - | - | - | - | - | Non-explosion | Non-explosion | Explosion |

It is understood, from the results shown in Table 4, that when a mixed refrigerant consisting of only HFO-1132(E) and R152a comprises HFO-1132(E) and R152a respectively in amounts of 57 mass% or less and 43 mass% or more based on the entire mixed refrigerant, the refrigerating capacity ratio relative to R404A is 70% or more, and a disproportionation reaction does not occur at 5 MPa and 150°C.

**[Table 5]**

| Item | Unit | Comparative example 1-1 | Comparative example 1-5 | Comparative example 1-6 | Comparative example 1-7 | Example 1-6 | Example 1-7 | Comparative example 1-8 |
|---|---|---|---|---|---|---|---|---|
| | | | A | B | C | D' | E' | F |
| E-HFO-1132 | mass% | R410A | 55.7 | 0.0 | 60.0 | 57.4 | 17.5 | 0.0 |
| R32 | mass% | | 44.3 | 32.0 | 40.0 | 5.0 | 5.0 | 22.9 |
| R152a | mass% | | 0.0 | 68.0 | 0.0 | 37.6 | 77.5 | 77.1 |
| GWP | - | 2088 | 300 | 300 | 271 | 81 | 130 | 250 |
| COP ratio | % (relative to R410A) | 100 | 101 | 109 | 101 | 104 | 109 | 109 |
| Refrigerating capacity ratio | % (relative to R410A) | 100 | 110 | 60 | 109 | 77 | 55 | 55 |

| Item | Unit | Comparative example 1-1 | Comparative example 1-9 | Example 1-8 | Example 1-9 | Example 1-10 | Comparative example 1-10 | Example 1-11 | Example 1-12 | Comparative example 1-11 |
|---|---|---|---|---|---|---|---|---|---|---|
| E-HFO-1132 | mass% | R410A | 20.0 | 20.0 | 20.0 | 20.0 | 30.0 | 30.0 | 30.0 | 30.0 |
| R32 | mass% | | 2.0 | 10.0 | 30.0 | 40.0 | 2.0 | 10.0 | 30.0 | 40.0 |
| R152a | mass% | | 78.0 | 70.0 | 50.0 | 40.0 | 68.0 | 60.0 | 40.0 | 30.0 |
| GWP | - | 2088 | 110 | 155 | 265 | 320 | 98 | 142 | 252 | 308 |
| COP ratio | % (relative to R410A) | 100 | 109 | 108 | 107 | 106 | 108 | 107 | 105 | 104 |
| Refrigerating capacity ratio | % (relative to R410A) | 100 | 55 | 59 | 72 | 79 | 60 | 65 | 79 | 86 |

| Item | Unit | Comparative example 1-1 | Comparative example 1-12 | Example 1-13 | Example 1-14 | Comparative example 1-13 | Comparative example 1-14 | Example 1-14 | Example 1-15 | Comparative example 1-15 |
|---|---|---|---|---|---|---|---|---|---|---|
| E-HFO-1132 | mass% | R410A | 40.0 | 40.0 | 40.0 | 40.0 | 50.0 | 50.0 | 50.0 | 50.0 |
| R32 | mass% | | 2.0 | 10.0 | 30.0 | 45.0 | 2.0 | 10.0 | 30.0 | 45.0 |
| R152a | mass% | | 58.0 | 50.0 | 30.0 | 15.0 | 48.0 | 40.0 | 20.0 | 5.0 |
| GWP | - | 2088 | 86 | 130 | 240 | 323 | 74 | 118 | 228 | 310 |
| COP ratio | %(relative to R410A) | 100 | 107 | 106 | 104 | 102 | 106 | 105 | 103 | 101 |
| Refrigerating capacity ratio | %(relative to R410A) | 100 | 66 | 71 | 85 | 97 | 71 | 77 | 92 | 106 |

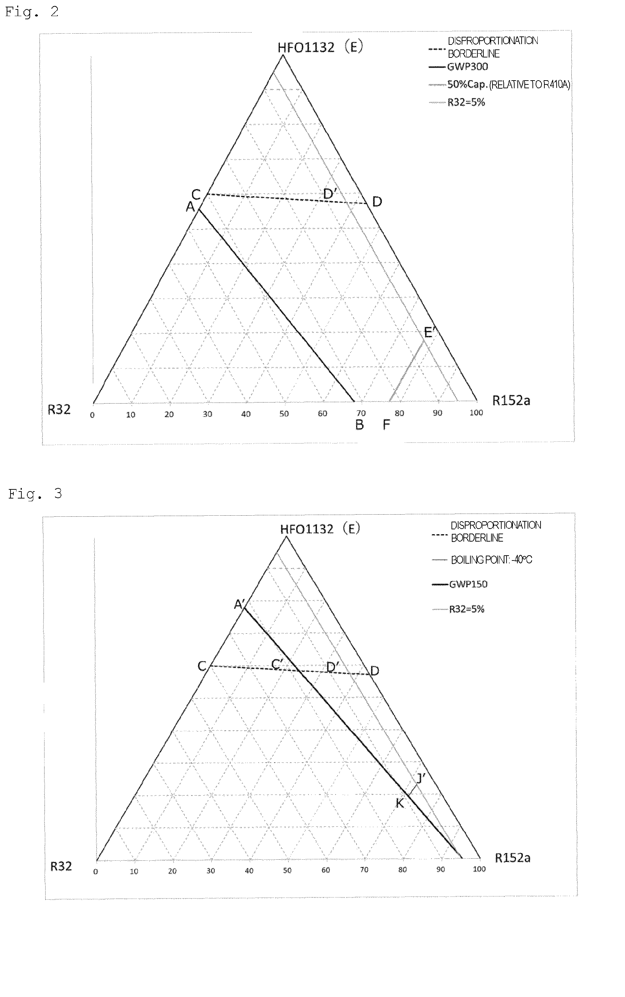

Based on these results, the following is understood: In the refrigerant of the present disclosure, when the mass% of HFO-1132(E), R32, and R152a based on their sum are respectively represented by x, y, and z, if coordinates (x,y,z) in a ternary composition diagram in which the sum of HFO-1132(E), R32, and R152a is 100 mass% satisfy the following requirements, a disproportionation reaction does not occur at 5 Mpa and 150°C, GWP is 300 or less, and a refrigerating capacity ratio relative to R410A is 55% or more (Fig. 2):

### <Requirements>

The coordinates (x,y,z) are within the range of a figure surrounded by straight lines CD', D'E', E'F, FB, BA, and AC that connect the following 6 points:
point D' (57.4, 5.0, 37.6),
point E' (17.5, 5.0, 77.5),
point F (0.0, 22.9, 77.1),
point B (0.0, 32.0, 68.0), and
point A (55.7, 44.3, 0.0), and
on the line segments CD', D'E', E'F, and BA (excluding the points A, C, B, and F).

**[Table 6]**

| Item | | Unit | Reference example 1 | Comparative example 2-1 | Comparative example 2-6 | Comparative example 2-7 | Example 2-6 | Example 2-7 | Comparative example 2-8 | Example 2-8 | Example 2-9 |
|---|---|---|---|---|---|---|---|---|---|---|---|
| | | | | | A' | B' | J' | K | C | C' | D' |
| Composition ratio | E-HFO-1132 | mass% | R134a | R1234yf | 77.9 | 0.0 | 22.9 | 19.3 | 60.0 | 58.3 | 57.4 |
| | R32 | mass% | | | 22.1 | 4.7 | 5.0 | 9.0 | 40.0 | 17.7 | 5.0 |
| | R152a | mass% | | | 0.0 | 95.3 | 72.1 | 71.7 | 0.0 | 24.0 | 37.6 |
| GWP(AR4) | | - | 1430 | 4 | 150 | 150 | 123 | 150 | 271 | 150 | 81 |
| COP ratio (relative to R1234yf) | | % | 105 | 100 | 100 | 108 | 106 | 106 | 101 | 102 | 103 |
| Refrigerating capacity ratio (relative to R1234yf) | | % | 99 | 100 | 301 | 103 | 140 | 141 | 311 | 234 | 199 |
| Power consumption for driving force | | % | 100 | 100 | 100 | 100 | 100 | 100 | 100 | 100 | 100 |
| Power consumption for heating | | % | 95 | 95 | 33 | 95 | 33 | 33 | 33 | 33 | 33 |
| Possible travel distance (without heating) | | % | 100 | 100 | 100 | 100 | 100 | 100 | 100 | 100 | 100 |
| Possible travel distance (with heating) | | % | 50 | 50 | 84 | 50 | 84 | 84 | 84 | 84 | 84 |
| Boiling point | | °C | -26.1 | -29.5 | -54.2 | -27.1 | -40.0 | -40.0 | -54.3 | -50.6 | -47.7 |
| Heating method | | System | Electric heater | Electric heater | Heat pump | Electric heater | Heat pump | Heat pump | Heat pump | Heat pump | Heat pump |

| Item | | Unit | Reference example 1 | Comparative example 2-1 | Comparative example 2-9 | Example 2-10 | Comparative example 2-10 | Example 2-11 | Comparative example 2-8 | Example 2-12 | |
|---|---|---|---|---|---|---|---|---|---|---|---|
| Composition ratio | E-HFO-1132 | mass% | R134a | R1234yf | 20.0 | 20.0 | 20.0 | 30.0 | 30.0 | 30.0 | |
| | R32 | mass% | | | 2.0 | 9.0 | 15.0 | 2.0 | 7.5 | 15.0 | |
| | R152a | mass% | | | 78.0 | 71.0 | 65.0 | 68.0 | 62.5 | 55.0 | |
| GWP(AR4) | | - | 1430 | 4 | 110 | 149 | 182 | 98 | 128 | 170 | |
| COP ratio (relative to R1234yf) | | % | 105 | 100 | 106 | 106 | 106 | 105 | 105 | 105 | |
| Refrigerating capacity ratio (relative to R1234yf) | | % | 99 | 100 | 130 | 142 | 153 | 146 | 156 | 171 | |
| Power consumption for driving force | | % | 100 | 100 | 100 | 100 | 100 | 100 | 100 | 100 | |
| Power consumption for heating | | % | 95 | 95 | 95 | 33 | 33 | 33 | 33 | 33 | |
| Possible travel distance (without heating) | | % | 100 | 100 | 100 | 100 | 100 | 100 | 100 | 100 | |
| Possible travel distance (with heating) | | % | 50 | 50 | 50 | 84 | 84 | 84 | 84 | 84 | |
| Boiling point | | °C | -26.1 | -29.5 | -37.9 | -40.2 | -41.9 | -41.2 | -42.8 | -44.7 | |
| Heating method | | System | Electric heater | Electric heater | Electric heater | Heat pump | Heat pump | Heat pump | Heat pump | Heat pump | |

| Item | | Unit | Reference example 1 | Comparative example 2-1 | Comparative example 2-13 | Example 2-13 | Comparative example 2-14 | Comparative example 2-15 | Example 2-14 | Comparative example 2-16 | |
|---|---|---|---|---|---|---|---|---|---|---|---|
| Composition ratio | E-HFO-1132 | mass% | R134a | R1234yf | 40.0 | 40.0 | 40.0 | 50.0 | 50.0 | 50.0 | |
| | R32 | mass% | | | 2.0 | 7.5 | 15.0 | 2.0 | 10.0 | 20.0 | |
| | R152a | mass% | | | 58.0 | 52.5 | 45.0 | 48.0 | 40.0 | 30.0 | |
| GWP(AR4) | | - | 1430 | 4 | 86 | 116 | 157 | 74 | 118 | 173 | |
| COP ratio (relative to R1234yf) | | % | 105 | 100 | 105 | 104 | 104 | 104 | 103 | 102 | |
| Refrigerating capacity ratio (relative to R1234yf) | | % | 99 | 100 | 163 | 174 | 189 | 180 | 197 | 221 | |
| Power consumption for driving force | | % | 100 | 100 | 100 | 100 | 100 | 100 | 100 | 100 | |
| Power consumption for heating | | % | 95 | 95 | 33 | 33 | 33 | 33 | 33 | 33 | |
| Possible travel distance (without heating) | | % | 100 | 100 | 100 | 100 | 100 | 100 | 100 | 100 | |
| Possible travel distance (with heating) | | % | 50 | 50 | 84 | 84 | 84 | 84 | 84 | 84 | |
| Boiling point | | °C | -26.1 | -29.5 | -43.6 | -45.2 | -46.9 | -45.7 | -47.7 | -49.7 | |
| Heating method | | System | Electric heater | Electric heater | Heat pump | Heat pump | Heat pump | Heat pump | Heat pump | Heat pump | |

Besides, based on the results shown in Table 6, the following is understood: In the refrigerant of the present disclosure, when the mass% of HFO-1132(E), R32, and R152a based on their sum are respectively represented by x, y, and z, if coordinates (x,y,z) in a ternary composition diagram in which the sum of HFO-1132(E), R32, and R152a is 100 mass% satisfy the following requirements, a disproportionation reaction does not occur at 5 Mpa and 150°C, GWP is 150 or less, and a boiling point is -40°C or less (Fig. 3):

### <Requirements>

The coordinates (x,y,z) are within the range of a figure surrounded by straight lines C'D', D'J', J'K, and KC' that connect the following 4 points:
point C' (58.3, 17.7, 24,0),
point D' (57.4, 5.0, 37.6),
point J' (22.9, 5.0, 72.1), and
point K (19.3, 9.0, 71.7), and
on the straight lines C'D', D'J', J'K, and KC'.

**[Table 7]**

| Item | Unit | Comparative example 3-1 | Comparative example 3-6 | Comparative example 3-7 | Example 3-6 | Example 3-7 | Comparative example 3-8 | Example 3-8 | Example 3-9 |
|---|---|---|---|---|---|---|---|---|---|
| | | | A" | B" | L' | M | C | C' | D' |
| E-HFO-1132 | mass% | R404A | 77.9 | 0.0 | 17.1 | 14.0 | 60.0 | 58.3 | 57.4 |
| R32 | mass% | | 22.1 | 4.7 | 5.0 | 7.8 | 40.0 | 17.7 | 5.0 |
| R152a | mass% | | 0.0 | 95.3 | 77.9 | 78.2 | 0.0 | 24.0 | 37.6 |
| GWP | - | 3922 | 150 | 150 | 131 | 150 | 271 | 150 | 81 |
| COP ratio | % (relative to R404A) | 100 | 107 | 121 | 117 | 118 | 108 | 110 | 112 |
| Refrigerating capacity ratio | % (relative to R404A) | 100 | 170 | 57 | 70 | 70 | 177 | 130 | 109 |

| Item | Unit | Comparative example 3-1 | Comparative example 3-9 | Example 3-10 | Comparative example 3-10 | Comparative example 3-11 | Example 3-11 | Comparative example 3-12 |
|---|---|---|---|---|---|---|---|---|
| E-HFO-1132 | mass% | R404A | 20.0 | 20.0 | 20.0 | 30.0 | 30.0 | 30.0 |
| R32 | mass% | | 2.0 | 7.5 | 15.0 | 2.0 | 7.5 | 15.0 |
| R152a | mass% | | 78.0 | 72.5 | 65.0 | 68.0 | 62.5 | 55.0 |
| GWP | - | 3922 | 110 | 141 | 182 | 98 | 128 | 170 |
| COP ratio | % (relative to R404A) | 100 | 117 | 117 | 116 | 116 | 115 | 115 |
| Refrigerating capacity ratio | % (relative to R404A) | 100 | 70 | 75 | 83 | 78 | 84 | 93 |

| Item | Unit | Comparative example 3-1 | Comparative example 3-13 | Example 3-12 | Comparative example 3-14 | Comparative example 3-15 | Example 3-13 | Comparative example 3-16 |
|---|---|---|---|---|---|---|---|---|
| E-HFO-1132 | mass% | R404A | 40.0 | 40.0 | 40.0 | 50.0 | 50.0 | 50.0 |
| R32 | mass% | | 2.0 | 7.5 | 20.0 | 2.0 | 10.0 | 20.0 |
| R152a | mass% | | 58.0 | 52.5 | 40.0 | 48.0 | 40.0 | 30.0 |
| GWP | - | 3922 | 86 | 116 | 185 | 74 | 118 | 173 |
| COP ratio | % (relative to R404A) | 100 | 114 | 114 | 112 | 113 | 112 | 111 |
| Refrigerating capacity ratio | % (relative to R404A) | 100 | 88 | 94 | 110 | 98 | 108 | 122 |

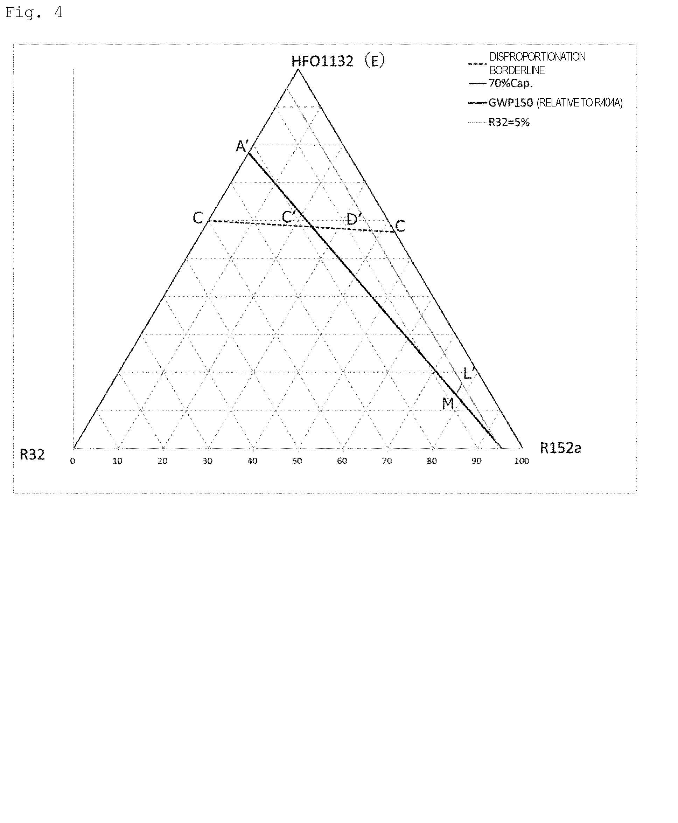

Besides, based on the results shown in Table 7, the following is understood: In the refrigerant of the present disclosure, when the mass% of HFO-1132(E), R32, and R152a based on their sum are respectively represented by x, y, and z, if coordinates (x,y,z) in a ternary composition diagram in which the sum of HFO-1132(E), R32, and R152a is 100 mass% satisfy the following requirements, a disproportionation reaction does not occur at 5 Mpa and 150°C, GWP is 150 or less, and a refrigerating capacity ratio relative to R404A is 70% or more (Fig. 4):

### <Requirements>

The coordinates (x,y,z) are within the range of a figure surrounded by straight lines C'D', D'L', L'M, and MC' that connect the following 4 points:
point C' (58.3, 17.7, 24,0),
point D' (57.4, 5.0, 37.6),
point L' (17.1, 5.0, 77.9), and
point M (14.0, 7.8, 78.2), and
on the straight lines C'D', D'L', L'M, and MC'.

## Claims

1. A composition comprising a refrigerant, wherein the refrigerant comprises trans-1,2-difluoroethylene (HFO-1132(E)) and 1,1-difluoroethane (R152a) respectively in amounts of 22.6 to 57 mass% and 77.4 to 43 mass% based on a total amount thereof.

2. The composition according to claim 1, comprising HFO-1132(E) and R152a respectively in amounts of 22.9 to 57 mass% and 77.1 to 43 mass% based on the total amount thereof.

3. The composition according to claim 1, comprising HFO-1132(E) and R152a respectively in amounts of 28.3 to 57 mass% and 71.7 to 43 mass% based on the total amount thereof.

4. The composition according to any one of claims 1 to 3, comprising HFO-132(E) and R152a in the total amount of 99.5 mass% or more based on the entire refrigerant.

5. A composition comprising a refrigerant,
wherein the refrigerant comprises R152a, R32, and HFO-1132(E) in a total amount of 99.5 mass% or more based on the entire refrigerant, and
when mass% of HFO-1132(E), R32, and R152a based on their sum are respectively represented by x, y, and z, coordinates (x,y,z) in a ternary composition diagram in which the sum of HFO-1132(E), R32, and R152a is 100 mass% are within the range of a figure surrounded by straight lines CD', D'E', E'F, FB, BA, and AC that connect the following 6 points:
point C (60.0, 40.0, 0.0),
point D' (57.4, 5.0, 37.6),
point E' (17.5, 5.0, 77.5),
point F (0.0, 22.9, 77.1),
point B (0.0, 32.0, 68.0), and
point A (55.7, 44.3, 0.0), and
on the line segments CD', D'E'**,** E'F, and BA (excluding the points A, C, B, and F).

6. The composition according to claim 5,
wherein in the refrigerant, the coordinates (x,y,z) are within the range of a figure surrounded by straight lines C'D', D'J', J'K, and KC' that connect the following 4 points:
point C' (58.3, 17.7, 24,0),
point D' (57.4, 5.0, 37.6),
point J' (22.9, 5.0, 72.1), and
point K (19.3, 9.0, 71.7), and
on the straight lines C'D', D'J', J'K, and KC'.

7. The composition according to claim 5,
wherein in the refrigerant, the coordinates (x,y,z) are within the range of a figure surrounded by straight lines C'D', D'L', L'M, and MC' that connect the following 4 points:
point C' (58.3, 17.7, 24,0),
point D' (57.4, 5.0, 37.6),
point L' (17.1, 5.0, 77.9), and
point M (14.0, 7.8, 78.2), and
on the straight lines C'D', D'L', L'M, and MC'.

8. The composition according to claim 2 or 5, for use as an alternative refrigerant for R410A.

9. The composition according to claim 3 or 6, for use as an alternative refrigerant for R1234yf.

10. The composition according to claim 9, for use as an alternative refrigerant for R1234yf, and use as a composition for operating a refrigeration cycle of air-conditioning equipment for electric vehicles.

11. The composition according to claim 1 or 7, for use as an alternative refrigerant for R404A.

12. A refrigeration apparatus comprising:
a use side heat transfer cycle for circulating a use side refrigerant;
a heat source side heat transfer cycle for circulating a heat source side refrigerant; and
a cascade heat exchanger for performing heat exchange between the use side refrigerant and the heat source side refrigerant,
wherein the heat source side refrigerant is the composition according to any one of claims 1 to 7.

13. A refrigeration method comprising a step of operating a refrigeration cycle using the composition according to any one of claims 1 to 7.

14. A refrigerator comprising the composition according to any one of claims 1 to 7 as a working fluid.
